# EUROPEAN PATENT APPLICATION

(11) **EP 3 767 281 A1**
(43) Date of publication of application: **20.01.2021**
(21) Application number: 19186460.2
(22) Date of filing: 16.07.2019
(51) Int. Cl.: G01N 21/64, B01L 3/00, F21V 8/00

(54) **ON-CHIP DETECTION OF MOLECULAR ROTATION**

(71) Applicant: Imec VZW, 3001 Leuven (BE)
(72) Inventor: NEUTENS, Pieter, 3001 Leuven (BE); MAHMUD UL HASAN, MD, 3001 Leuven (BE); VAN DORPE, Pol, 3001 Leuven (BE)
(74) Representative: DenK iP bv

(57) **Abstract**

A photonic system (100) and a method are provided for analyzing target molecules which emit radiation upon being exposed to excitation radiation. It is based on a radiation source (101) adapted to provide excitation radiation with a predetermined polarization state, and a photonics chip (102) including an analysis region (103) for exposing target molecules to radiation from the radiation source (101), so target molecules with a dipole component along the direction of polarization of the excitation radiation emit radiation with an angular profile. A waveguide structure (105) captures radiation emitted from the analysis region (103) by target molecules. The waveguide structure (105) is adapted to extract the emitted radiation in different positions in accordance with the angular profile of the emitted radiation, for sampling the angular profile.

## Description

### Field of the invention

The invention relates to the field of molecular analysis. More specifically it relates to devices and methods for obtaining molecular rotational diffusion, for instance in biosensing devices.

### Background of the invention

Molecular interactions and parameters related to molecular movement can be studied optically, for example by fluorescence. This technique usually requires to make the target molecules fluorescent, by tagging or binding them to fluorescent particles. Fluorescence is also widely used for sensing of small concentrations of biomolecules in samples, e.g. in body fluids, in order to determine the concentration of certain biomarkers. These sensing principles generally rely on assays with several washing steps to remove fluorescent particles or dye that have not reacted with analyte molecules.

Fluorescence is widely used as the transduction medium for bio-sensing and physical chemistry characterization applications. Generally, fluorescently labeled target analyte molecules are excited with a laser source and the subsequent emission is detected. A careful analysis of this detected light is used to characterize different properties of the target analyte. If the molecules are excited with a polarized light, the depolarization measurement on the emission light can be used to characterize the Brownian rotational motion of the analyte. This information on Brownian motion is used to characterize the molecular interaction at nanoscale. The fluorescence polarization-based technique uses a conventional microscope for excitation and collection of fluorescence. This requires a bulky system, which impedes portability. Further, such system limits high throughput assays.

### Summary of the invention

It is an object of embodiments of the present invention to provide a photonics device and a method for analyzing rotational motion of target molecules, with good signal to noise ratio, allowing a compact setup and enabling high throughput assays.

In a first aspect, the present invention provides a photonic system for analyzing target molecules which emit radiation upon being exposed to excitation radiation. The photonic system comprises:
- a radiation source adapted to provide excitation radiation with a predetermined polarization state,
- a photonics chip including an analysis region for exposing target molecules to radiation from the radiation source, so target molecules with a dipole component along the direction of polarization of the excitation radiation emit radiation with an angular profile, and a waveguide structure for capturing radiation emitted from the analysis region by target molecules.
The waveguide structure is adapted to extract the emitted radiation in different positions in accordance with the angular profile of the emitted radiation, for sampling the angular profile.

It is an advantage of embodiments of the present invention that a compact photonics system with a small footprint can be obtained. It is a further advantage that the emission pattern can be studied in 2D rather than in 3D due to the direct coupling of the target emission into the waveguide structure.

A system in accordance with embodiments of the present invention may further comprise a detection system for receiving radiation emitted by target molecules and captured by the waveguide structure, wherein the detection system is adapted to analyze the radiation and to provide the angular profile of its polarization state.

It is an advantage of embodiments of the present invention that a detection platform can be provided.

The detection system may be an integral part of the photonics chip. It is an advantage of embodiments of the present invention that a specialized detection system can be used in a compact device.

In a system in accordance with embodiments of the present invention, the radiation source may be an integral part of the photonics chip.

It is an advantage of embodiments of the present invention that a highly compact, CMOS-compatible on-chip device can be provided. It is an advantage that the system can be integrated in a lab-on-chip system capable to measure rotational diffusion of target molecules. In particular embodiments, the present invention provides the ability of integrating source, photonic/microfluidic chip and detector in a single compact system.

In an alternative system in accordance with embodiments of the present invention, the radiation source and/or the detector may be elements physically separated from the photonics chip. It is an advantage of embodiments of the present invention that a modular device can be provided, where different and interchangeable sources and/or detectors can be used, while still being compact. The ability to integrate a device that can measure rotational diffusion into a lab-on-chip system is an advantage of this system.

In a system in accordance with embodiments of the present invention, the waveguide structure may be a planar waveguide structure comprising an analysis region for exposing target molecules to radiation from the radiation source, the analysis region being adapted to receive radiation emitted from target molecules at a distance of the surface of the waveguide structure within the near field distance of the waveguide, and for capturing said radiation into the waveguide.

It is and advantage of embodiments of the present invention that a planar waveguide structure allows easy integration in a photonics/microfluidics chip with a compact setup.

In a system in accordance with embodiments of the present invention, the waveguide structure may comprise a ring grating. It is and advantage of embodiments of the present invention that the angular power distribution can be studied with an integrated imager or a microscope, for a continuous distribution of angles. It is a further advantage that the system can be built as a chip which can be used with a standard fluorescent microscope easily, by coupling the microscope to receive radiation extracted by the ring grating.

In a system in accordance with alternative embodiments of the present invention, the waveguide structure may comprise a star coupler coupled to a plurality of routing waveguides, where the analysis region is on the point of convergence of the star coupler. It is and advantage of embodiments of the present invention that radiation detection can be done with inexpensive photodetectors, which may be further integrated in the chip, further improving compactness. One of the routing waveguides may be configured for introducing excitation radiation into the analysis region. It is and advantage of such embodiments of the present invention that excitation radiation can be introduced accurately in the analysis region, thus allowing routing the excitation light through the platform to a desired region.

In particular embodiments of the present invention, the waveguide structure may comprise at least two crossing waveguides. The two crossing waveguides may be single mode waveguides. Single mode waveguides have the advantage that they allow defining very well emission profile and polarization in the slab, e.g. at the well position.

A system in accordance with embodiments of the present invention may further comprise a microfluidic channel for bringing target molecules in a fluid sample to the analysis region.

It is an advantage of embodiments of the present invention that rotational molecular diffusion can be characterized in a compact device and with high throughput.

In a second aspect, the present invention provides a biosensing device comprising the photonic system in accordance with embodiments of the first aspect of the present invention.

In a third aspect, the present invention provides a method of analyzing target molecules in a fluid sample. The method comprises:
- positioning target molecules in a fluid sample on an analysis region,
- exposing the target molecules to excitation radiation with a predetermined polarization state,
- coupling radiation emitted by a target molecule with an angular profile from the analysis region into a waveguide structure,
- extracting the radiation at different positions which depend on the components of the angular profile of the emitted radiation, for sampling the angular profile, and
- analyzing the radiation signal captured by the waveguide structure and providing the angular distribution of the coupled radiation.

In a method in accordance with embodiments of the present invention, positioning target molecules on an analysis region comprises bringing target molecules at a distance to the surface of of a planar waveguide structure within the near field distance. The method can be carried out in a compact device. It is a further advantage that the method provides a signal with high signal to noise ration due to near-field excitation and collection approach.

In a method in accordance with embodiments of the present invention, positioning target molecules on an analysis region may comprise positioning target molecules to the crossing of a plurality of routing waveguides in a star coupler.

In a method in accordance with embodiments of the present invention, exposing the target molecules to excitation radiation may comprise directing radiation with a waveguide from a source to the analysis region.

It is an advantage of embodiments of the present invention that the detector and source can be provided or coupled to a single, highly integrated, analysis platform.

In a method in accordance with embodiments of the present invention, positioning target molecules in a fluid sample on an analysis region comprises placing a bulk solution including target molecules on the analysis region.

It is an advantage of embodiments of the present invention that a high throughput can be obtained.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates the rotation of a target molecule during fluorescence lifetime.
FIG 2 illustrates the calculated angular profile of emitted radiation for a fixed molecule and for a free small molecule.
FIG 3 illustrates an exemplary embodiment of the present invention comprising a waveguide slab and a ring resonator.
FIG 4 illustrates an exemplary embodiment of a photonic system in accordance with embodiments of the present invention, comprising a star coupler.
FIG 5 illustrates an exemplary embodiment of a photonic system in accordance with embodiments of the present invention, comprising two crossing waveguides.
FIG 6 illustrates an exemplary embodiment of a photonic system in accordance with embodiments of the present invention, further comprising a microfluidic platform and a processing unit.
FIG 7 shows steps of a method according to an embodiment of the present invention, including optional steps in dashed text boxes.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present application reference is made to an integrated photonics device, this may refer to a variety of forms and material systems such as for example low-index contrast waveguide platforms (e.g. polymer waveguides, glass/silica waveguides, AlxGa1-xAs waveguides, InxGa1-xAsyP1-y waveguides), high-index contrast waveguides (e.g. Silicon-on-Insulator, semiconductor membranes), plasmonic waveguides (e.g. metal nano-particle arrays, metal layers), also called Photonic Lightwave circuits (PLC). An integrated photonics device comprises at least one integrated optical component, such as for example but not limiting to an integrated optical cavity, an integrated optical resonator, an integrated optical interferometer, an integrated optical coupler, a waveguide, a taper, a tuneable filter, a phase-shifter, a grating, a modulator, a detector, a source or a combination of one or more of these elements. The optical components can be active or passive. The components can be integrated for example monolithically, heterogeneously or hybridly. Monolithical integration is the integration technology that uses a single processing flow to process the diverse components potentially using different materials, e.g. integrated germanium detectors in silicon photonics IC. Heterogeneous integration is the integration technology for which the components are processed in separate process flows, and are then integrated at die or wafer level, e.g. BCB bonding, wafer bonding, and other bonding schemes, 3D integration. Hybrid integration is the integration of components or materials on processed photonic integrated platforms, e.g. flip-chipping of detectors, bumping, gluing, wire bonding, co-packaging, etc.

The integrated photonics device may be an SOI (Silicon-on-Insulator) material system, also referred to as silicon photonics system. However, the devices and methods of the present invention can be based on other material systems, such as for example III-V material systems, metallic layers, low index contrast material systems or a combination thereof.

The present invention proposes adapting the integrated photonics architecture to provide sensing of molecular characteristics related to the polarization status, and changes thereof, of the radiation emitted by a fluorescent target molecule which has been irradiated with radiation with a predetermined polarization.

Where in embodiments of the present application reference is made to "fluorescent target molecules", reference is made to molecules that are of interest to a user who may analyze them. These molecules may be fluorescent per se, or they may be linked to fluorescent markers (e.g. fluorescent tags or dyes).

Embodiments of the present invention provide a photonics system including a photonics chip and a radiation source which emits polarized radiation. Other embodiments provide a method for exciting fluorescent target molecules on an analysis region on the photonics chip.

In embodiments of the present invention, the radiation source may be a source of visible light. In alternative embodiments, the radiation source may emit other types of radiation such as infrared, ultraviolet, or other electromagnetic radiation, as long as it can be provided in a polarized state, or it can be polarized before using it to excite the target molecules.

In a sample, the target molecules are dispersed in a medium which allows the target molecules to freely rotate. Once the target molecules are placed on the analysis region, which may be a well, they are exposed or irradiated with excitation radiation emanating from the radiation source.

The fluorescent target molecules with a dipole component along the polarization direction of the excitation radiation become excited and start emitting radiation. Although, in theory, molecules with no dipole component may absorb excitation radiation, they do so with lower efficiency.

The polarized radiation is preferably linearly polarized. In particular, the electric field component of the polarized light may have a main electric field component in one direction in the plane of the waveguide, e.g. the slab waveguide. Although other in-plane field components can be present, a highly polarized TE polarization, preferably perfect TE polarization, is preferred in order to provide a high performance of the device. The radiation is emitted with a directional component, or angular profile, which depends on the orientation of the molecule.

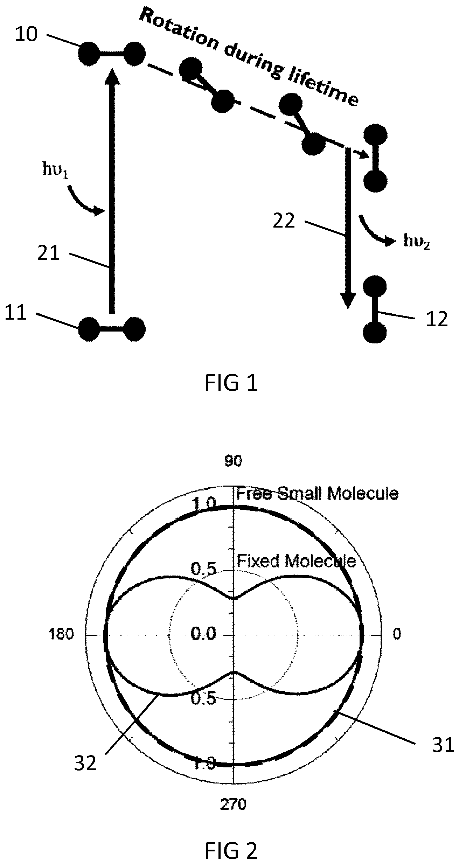

During fluorescence lifetime of the molecule, the molecule to which the fluorescent particle or dye is attached can rotate and hence the dipole emission profile will depend on both the initial dipole orientation and the rotation it underwent during the fluorescence lifetime. The average lifetime can be determined for the emitting molecules, from the number of fluorophores emitting in a time period, which follows an exponential decay. Small molecules will move and change direction many times, so the light will be extracted in many directions, and the emission polarization of single molecules will change largely as illustrated in FIG 1. Larger molecules take longer to move, so the change of direction (or change of emission polarization) of the emitted radiation will be smaller, and the change of angular distribution of the emitted light will be smaller than for the case of smaller molecules. On average, the emission will tend to have uniform character for small molecules. For larger molecules, on average, the emission will show a directional character, with a preferential emission orientation which depends on the polarization of the excitation light. Thus, the angular profile of the fluorescence emission compared to the input polarization can give us valuable information about the mobility of the studied molecule and the viscosity of its surroundings.

By analyzing the change of the fluorescent dye emission polarization compared to the excitation polarization due to molecular rotation during the fluorescence lifetime, the molecular rotational diffusion time of molecules in bulk solution can be determined. With bulk solution it is meant a solution wherein the molecules of interest are not bound to a surface, so they can move freely in the solution. The radiation emitted by the molecules has a spatial pattern in three dimensions, but typically a complex optical setup would be needed to study such emission pattern in 3D. The present invention simplifies this problem by reducing it to a 2-dimensional problem, by exploiting the direct coupling of the fluorescent dye emission into a photonic waveguide structure.

Hence, in accordance with embodiments of the present invention, the emitted radiation is captured by a waveguide structure on the chip, which includes optical features with directional components. These features allow extracting in different positions the captured radiation, which depend on the components of the direction of emission and its average. For example, the radiation may be emitted in a predetermined direction and may be coupled in the waveguide structure. The waveguide structure includes one or more optical elements covering different positions in an angular distribution (for example over 360°, the distribution being continuous or discrete) around the analysis region. These optical elements can extract radiation travelling in one direction, in accordance with the components of the direction of the emitted radiation.

If the molecule is large, the angular distribution of the radiation extracted by the optical features during the fluorescence lifetime will be different (with tendency to anisotropy) from the angular distribution of the radiation emitted by a small molecule (which will be more uniform, due to larger directional changes). The difference between the two cases is the amount of rotation that a large molecule undergoes as compared to a small molecule for a (known) fluorescence lifetime. This process is illustrated in FIG 1 and FIG 2.

FIG 1 schematically shows the process of rotation of a molecule 10. A polar molecule 10 with a predetermined initial orientation 11 receives excitation radiation 21 with a predetermined energy hv1 in a predetermined polarization state coinciding with the initial orientation 11 of the molecule 10. The molecule is excited and starts emitting radiation. The molecule rotates from the initial orientation 11 to the final orientation 12 during the fluorescence lifetime. This produces a change in the polarization between the excitation radiation 21 (of energy hv1) and emission radiation 22 (of energy hv2).

The rotation of the molecules, and related parameters (speed, molecular rotational diffusion time, etc.), in a bulk solution depend on the molecular weight, viscosity, temperature, molecular interactions, etc. which can be studied by analyzing molecular rotation.

FIG 2 shows the calculated angular power distribution of the averaged fluorescent molecule emission, coupled to a silicon nitride slab waveguide, for the two extreme examples of freely rotating molecules and fixed molecules, e.g. molecules fixed to a substrate.

The orientation of the linearly polarized excitation light follows the vertical axis of the graph. Two opposite behaviors are studied: freely rotating molecule and fixed molecule.

The orientation of the freely rotating molecules (dashed curve 31) is completely randomized within the fluorescence lifetime, and as a result a uniform angular distribution of the fluorescence emission is observed. For fixed fluorescent molecules, a more directional emission is observed (peanut-shaped curve 32), corresponding to the initial angular profile. The initial angular profile does not change during the time in which the fluorescence can be detected. It can be inferred that the molecule did not rotate.

These are the two idealized extreme cases; in practical implementations, measured angular distribution curves will lie in between these two curves. Small molecules will have an angular emission pattern resembling the dashed curve 31, while large molecules will come close to the peanut-shaped curve 32 as they cannot rotate over large angles during the fluorescence lifetime.

The analysis of molecular rotational diffusion, in particular the study of the change in rotational diffusion time, can be used to study molecular dynamics. For example, it can be used to characterize molecular interactions, and/or to study binding kinetics in the bulk solution, and/or to quantify viscosity of liquids. It can be used to characterize target molecules, e.g. weight and/or size of these molecules.

In a first aspect, the present invention provides a photonics system which enables the measurement of the molecular rotational diffusion time of target molecules (e.g. in bulk solution), by exciting target molecules with polarized radiation and studying the angular power distribution of radiation emitted from said molecules. The photonics system may be implemented in a biosensing device. A biosensing device is an analytical device used to detect presence (or absence) of specific analytes. A biosensing device may be used in a wide range of applications ranging from clinical applications, for instance for diagnostics, through to environmental and agricultural applications.

In some embodiments, a detector captures molecular emission (for example, fluorescence, e.g. from a labeled molecule) coupled into a waveguide structure (e.g. a slab waveguide), and the angular power distribution of said fluorescence emission is extracted and measured from the waveguide structure at different positions depending on the angular distribution. The data obtained from the measurement (e.g. intensity measurement) can be used to determine the average rotation of the molecule. This information is valuable for studying molecular kinetics, binding kinetics in bulk liquids and viscosity.

The system includes a photonics platform or photonics chip which may be an integrated photonics chip including at least a waveguide structure and an analysis region or well. The system further includes an excitation source with a well-known polarization state, which may be an external source or also integrated in the platform. The photonics chip may be a CMOS compatible chip.

The waveguide structure may be a planar waveguide structure, e.g. a slab waveguide or other platform including waveguide architectures, e.g. a ring grating, which extract the radiation in accordance with its directional components. The analysis region may be a zone at a predetermined distance from the waveguide architectures, where fluorescently labelled molecules are placed; the predetermined distance may be such that it allows coupling of light into the waveguide structure (e.g. close thereto, for example in contact with the surface up to few nanometers away therefrom, for example between 0 and 150 nm from the surface)

In embodiments of the present invention, a detection system (including one or more detectors) can be coupled to the waveguide structure, e.g. optically coupled thereto, so the detection system can measure the angular power distribution of the emitted fluorescence light. The waveguide structure, in turn, may be adapted to couple the radiation emitted by the target molecules in accordance with an angular power distribution to the one or more detectors. The waveguide structure may include optical elements distributed around the well, so radiation travelling in a given direction can be extracted to the detection system in accordance with its direction, so the detection system can measure that direction.

The waveguide structure can accommodate fluorescence excitation with a well-know polarization state, combined with a detector capable of obtaining the angular power distribution of the emitted fluorescent light.

The device can be further combined with a microfluidic system for bringing a bulk solution into the analysis region where the molecules are exposed to polarized excitation radiation. For example, a bulk solution can be placed on the analysis region, so a molecule enters the region, for example a well. In some embodiments, a flow of the solution can be run over the analysis region so that fluorescence can be captured during a known or estimated time, so that an estimation of the rotation speed can be obtained. In most applications, flow speed will not be so high that the molecules can escape the analysis region in nanoseconds, before emitted radiation can be captured during sufficient time for the angular power distribution to be analyzed. The same can be said about the size of the analysis region, which will not be so small that proper coupling would be hindered. High throughput assays can be provided, as the bulk measurement and/or flow measurement can be done fastly.

The exposure to polarized excitation radiation may be done by an excitation waveguide. Such excitation waveguide may be present in the same photonics chip where the waveguide structure is provided. However, the present invention is not limited thereto, and the excitation waveguide may be out of the chip. In alternative embodiments, the excitation may be a free space polarized excitation.

The photonics system of the present invention may combine the photonics chip and the microfluidics platform. They may be integrated, packaged, etc. Alternatively, they may be modular, e.g. attachable to and detachable from one another. This allows providing a system where the microfluidics part is disposable.

Further, the radiation source and detection system (e.g. photodetectors) may be integrated also, thus forming a single compact device. This allows providing a highly compact, CMOS-compatible system, e.g. an on-chip device.

In other embodiments of the present invention, the radiation source or the detection system, or both, may be part of the system, but being external elements not integrated with the chip. This interchangeability allows a large flexibility of applications, choice of sources, detectors, etc.

In the following, three exemplary geometries are described which may realize the proposed detection of molecular rotation. However, the present invention is not limited to these three specific geometries, and other configurations allowing measurement of the molecular rotational diffusion with a planar photonic waveguide structure can be used.

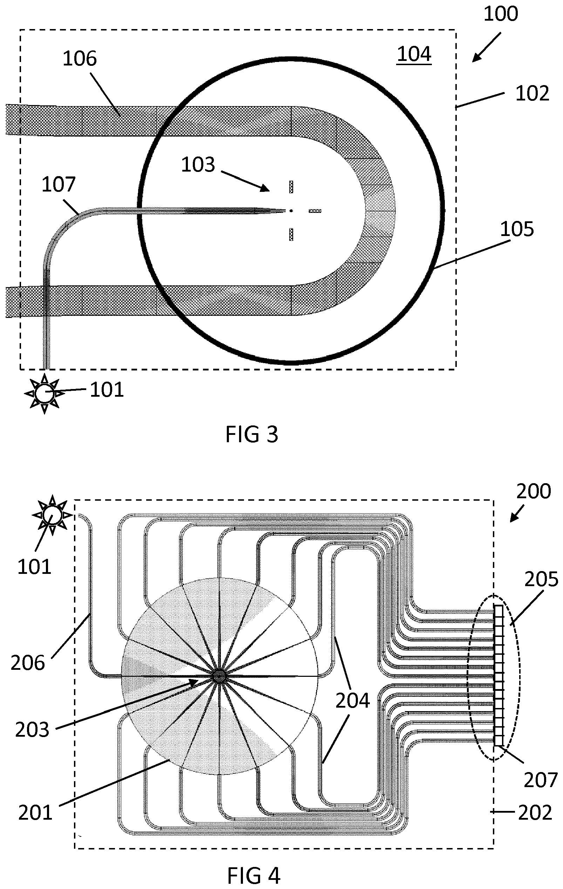

FIG 3 shows a photonic system 100 including a radiation source 101 (e.g. laser, a structure for providing light...) and a photonics structure or photonics chip 102 comprising an analysis region 103 (e.g. a well, which may be a micron-scaled well), and a waveguide structure 104 comprising a slab waveguide. Fluorescent target molecules (e.g. target molecules which are labelled with fluorescent particles) are positioned in the analysis region 103. For example, a bulk solution including the target molecules can be brought to the analysis region 102 by means of a closed microfluidic channel 106. Alternatively, the solution may be flowed over the analysis region 103. In some embodiments, the molecules do not bind with the analysis region, e.g. its surface is treated so there is no binding. However, in other embodiments the target molecules may bind to a surface during the analysis so as to study binding dynamics, e.g. binding and fixation of molecules to surface receptors, which would result in a reduction of mobility and thus a change in the emitted radiation extracted by the optical features.

There is a maximum distance at which there is noticeable coupling of radiation into the waveguide structure, over which there is no coupling, and this distance depends of the type of waveguide structure, radiation, etc. This distance can be calculated from the near field of the waveguide. For a specific waveguide system, the near-field distance is defined by the distance from the waveguide surface where the electromagnetic field drops by 1/e of the value at the surface, when the electromagnetic radiation is leaving the waveguide surface. This region is usually related to evanescent waves. When molecules are placed in a solution on the analysis region, several of these molecules will be at a distance to the waveguide surface which is within the near field distance. Radiation emitted by these molecules will be coupled into the waveguide. For example, for fluorescence, target molecules with fluorescent particles will couple the emitted light if they are at a distance to the waveguide of 300 nm or less, e.g. 150 nm or less, e.g. 50 nm or less.

The analysis region 103 is positioned and shaped so as to fit or contain target molecules at a distance from the waveguide such that radiation from the fluorescent target molecules can be coupled within the evanescence field into the waveguide.

A fluorescent target molecule in the analysis region 103 with a dipole component in the direction of polarization of the excitation radiation becomes excited by the excitation light and starts emitting radiation; e.g. the fluorescent particles or tags absorb energy and start emitting fluorescence. Radiation (e.g. fluorescent light) is emitted with an angular profile, e.g. the front of the emitted radiation waves are emitted with a directional component. The waves can be coupled into the slab waveguide structure 104 while keeping the angular component. The waveguide structure may be provided on a silicon nitride platform, e.g. a SiN slab waveguide. As fluorescent particles or tags (e.g. fluorophores) are typically excited by radiation with a wavelength within the visible range, it is preferred to use compatible platforms, being transparent for these wavelengths, such as SiN. However, the present invention is not limited to SiN and other platforms, such as platforms comprising NbO, TiO, etc., can also be used.

Radiation coupled in the slab waveguide structure 104 continues to travel with the same angular profile, until it interacts with an optical feature 105, in this case a ring grating positioned on top of the slab waveguide 104 and surrounding the analysis region 103, e.g. being concentric to the analysis region 103.

The radiation coupled in the slab waveguide travels in accordance with the angular profile within the slab waveguide, and the optical feature 105 extracts the emitted radiation at different positions (at different angles along the perimeter of the optical feature 105). This extracted radiation is collected by a sensor, e.g. by means of an objective of a microscope focused on the ring grating. The position at which the optical feature 105 extracts the radiation, or more specifically for the exemplary embodiment, the region of the ring grating that illuminates, can be obtained from the sensor (e.g. from the image obtained by the microscope). This information can be used for sampling the angular profile of the radiation emitted by target molecules. For example, imaging the light output from this ring grating (e.g. with microscope or an integrated imager) can directly give the angular distribution of the waveguide coupled fluorescent light.

The excitation radiation can be provided by a waveguide 107 which is coupled to the source 101 of polarized radiation (e.g. polarized light). However, this waveguide 107 is optional, and the excitation radiation may be a free space excitation.

The present invention is not limited to slab waveguides. For example, FIG 4 shows a different photonic system 200, including a star coupler 201 on a photonics chip 202, where radiation (e.g. fluorescence light) from an analysis region 203 can be collected. In this case, the optical element comprises the star coupler 201 and the plurality of waveguides 204 laid out in star formation at discrete angles, for instance evenly spread, and surrounding the analysis region 203, connected to the star coupler 201 and radiating from the analysis region 203.

Fluorescently labeled target molecules are positioned in the analysis region 203, being a micron-scale well. Any wettable surface can be used as analysis region, so theoretically nanometric regions could be used, e.g. nanopores. However, with such small analysis region, the obtained signal is very weak. On the other hand, there is in principle no upper boundary on the maximum size, but the larger the analysis region, the larger the detection device will become to measure the directionality in an accurate way. A good compromise between signal strength and compactness of the device can be obtained with an analysis region up to a few hundreds of microns, to provide a compact chip design). The target molecules emit fluorescent light in a direction within an angular distribution. The star coupler 201 allows collection of the emitted radiation. The radiation is collected at discrete angles, so the light travelling with an angular distribution is coupled into some of the plurality of routing waveguides 204 connected to the star coupler 201. During fluorescence lifetime, if the angular distribution changes, a different group of the routing waveguides 204 will receive the fluorescent light from the analysis region 203.

The collected radiation, coupled to the routing waveguides 204, is rerouted to a different part of the platform, so detection can be performed at a different position on the chip. The radiation is extracted from the waveguides 204 through an output zone 205 into photodetectors or into a sensor, or in general a sensing system 207 which can discern which waveguide has captured radiation, and thus, which angular component the coupled radiation had at the moment of emission

This allows radiation detection by low cost photodetectors, e.g. one photodetector per routing waveguide. The photodetectors may be integrated on the chip. The output zone 205 may include several zones distributed around the chip, e.g. the edges of the chip, not a single coherent zone. In other embodiments the imaging of the light output from the waveguide output zone can be performed with standard imaging techniques, such as for instance, but not limited thereto, microscopy.

A microfluidic channel (not pictured) can bring the bulk solution into contact with the analysis region 203, for instance as shown in FIG 3.

A small molecule would emit, during fluorescence lifetime, radiation with a varying angular distribution, so the radiation extracted through the output 205 would be detected through each waveguide 204 with uniform intensity for the time of fluorescence emission, whereas a large target molecule would vary the angular distribution to a lesser extent, so the radiation obtained on average at the output would not be uniform, and radiation would be extracted with higher intensity from some of the waveguides than from others.

As before, the excitation can be introduced by coupling the polarized radiation from a source 101 through a waveguide 206, for example using one of the arms of the star coupler 201, or by free space excitation. The source 101 may be external or integrated in a chip.

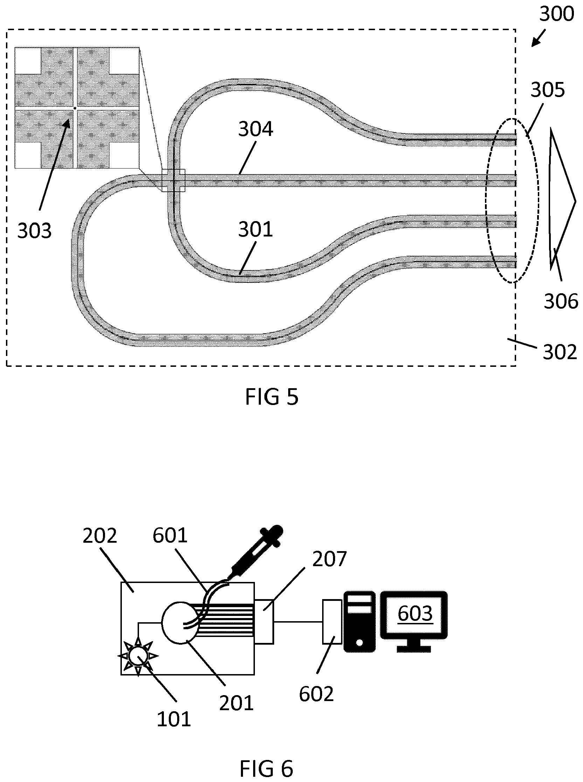

A third geometry for a waveguide structure applicable to a photonics device in accordance with embodiments of the present invention is shown in FIG 5. In this case the photonic system 300 includes a platform or chip 302 with a waveguide structure comprising single mode waveguides 301, 304 rather than a slab waveguide or a star coupler, into which the light emitted by target molecules (e.g. fluorescent light from labelled molecules) is directly coupled. The emission profile from single mode waveguides and polarization in the slab is very well defined. The two waveguides cross in the analysis region 303, shown in the zoomed part at the left hand top corner. The analysis region 303 is a nanoscale well, which can be used to contain the fluorescently labeled molecules. The configuration is not limited to two waveguides 301, 304, and the number of arms can be chosen according to the required device characteristics. However, in cases with a small number of waveguides, it is preferred that the radiation source is not provided through a waveguide, e.g. it may be an off-chip polarized source.

The working principle is the same or similar as the star coupler device. Light emitted with an angular distribution couples with higher intensity, depending on the angular component, into a predetermined waveguide, and less in others. For example, vertically polarized excitation light strongly excites a target molecule with a strong vertical component. The emitted light will show strong coupling to the horizontal waveguide 304, and lower coupling on the vertical waveguide 301. During fluorescence lifetime, if the molecule is small, the target molecule rotates and the emitted light will fastly change direction, and on average emitted light is coupled, e.g. substantially equally coupled, in all the waveguides. The angular distribution in the output will be extracted through all the waveguides. If the target molecule is large, it will not, or not substantially, rotate, and on average more light intensity will be coupled into one waveguide than in another one. This will be visible at the output 305, as the emitted light extracted through the output 305 will be more intense in one waveguide, e.g. in the horizontal waveguide 304, than in the other waveguide, e.g. in the vertical waveguide 301, depending on the polarization of the excitation radiation.

As in the case of FIG 3 the molecules can be brought into contact with the analysis region 303 in a bulk solution, e.g. using microfluidics, e.g. by depositing the solution on the region, by bringing the solution in a channel, etc.

The photonics chip may include photodetectors integrated therein. The source may be external, so different sources can be used in the same platform. In other embodiments of the present invention, the source may be integrated, and the detection system may be external, so the detectors can be chosen corresponding to the type of fluorescence. In other embodiments, both the source and detection system 306 (microscope, photodetectors, etc.) are external, allowing great flexibility of target molecules and detection techniques. This can be the case of the example illustrated in FIG 5. In other embodiments, the source and the photodetectors are integrated, allowing a compact device very suitable for LOC applications.

The solution provided by the present invention may be an on-chip solution, compatible with CMOS technology. For example, the chip and optionally the source and/or detection system may be provided using well known CMOS processing techniques.

FIG 6 shows an exemplary embodiment of a device in accordance with embodiments of the present invention, comprising the configuration shown in FIG 4, including an integrated radiation source 101 and a star coupler 201, and an integrated sensing system 207 (e.g. integrated photodetectors).

The photonics system may further be combined with microfluidics platform 601. For example, the microfluidics platform may be integrated with the photonics chip 202, or it may be modular, allowing re-utilizing the photonics chip.

The photonics system may further comprise a processor 602 which includes an input port for receiving an input signal from the detection system 207 and which stores instructions for processing data related to the position of the extraction of emitted light, and for therefrom obtaining information related to molecular rotation, e.g. including but not limited to the rotation speed of a target molecule, and/or the size of the target molecule, and/or binding dynamics, and/or molecular dynamics, and/or reaction dynamics, and/or viscosity of the solution. For example, the processor 602 may be included in the detection system 207 or in a computing system. A data storage and/or output display 603 may be included, for storing or displaying the results of the processing of data related to the position of the extraction of emitted light.

In a further aspect, the present invention provides a method of molecular analysis in which polarized excitation radiation is used to irradiate target molecules (e.g. fluorescently labelled target molecules) which can be excited by the polarized excitation light, when they have a dipole component along the excitation polarization direction. The target molecule thus emits light, which radiates with a direction-dependent intensity, providing an angular distribution of the emitted radiation. The light emitted from the target molecule is coupled to a waveguide structure, and continues travelling in the same direction with the same angular profile. This light is extracted, and coupled to a detection system, in a predetermined position or plurality of positions so the components of the direction of the light can be discriminated depending on the position of extraction. For example, each of a plurality of sensing elements will detect an amount of radiation exiting the waveguide structure which depends on the orientation of the emitted radiation (e.g. light) coupled into the waveguide structure, thus obtaining a readout of the angular profile of the emitted light.

This occurs while the target molecule is floating in the bulk solution for a predetermined time. Particles and molecules, including fluorescently labelled target molecules, can rotate during the fluorescence lifetime. This causes a change in the dipole emission profile, depending on both the initial dipole orientation and the rotation it undergoes during the fluorescence lifetime. This change in angular profile is shown in average as an emission of radiation with directional orientation which tends to be more uniform for smaller molecules and more directional for larger molecules, as explained earlier. The orientation of emitted radiation can be obtained as a measure for the angular power distribution.

The change in rotational diffusion time, which can be used to study molecular interactions, viscosity of the medium, etc., may be obtained from the angular power distribution of the emission in the waveguide structure.

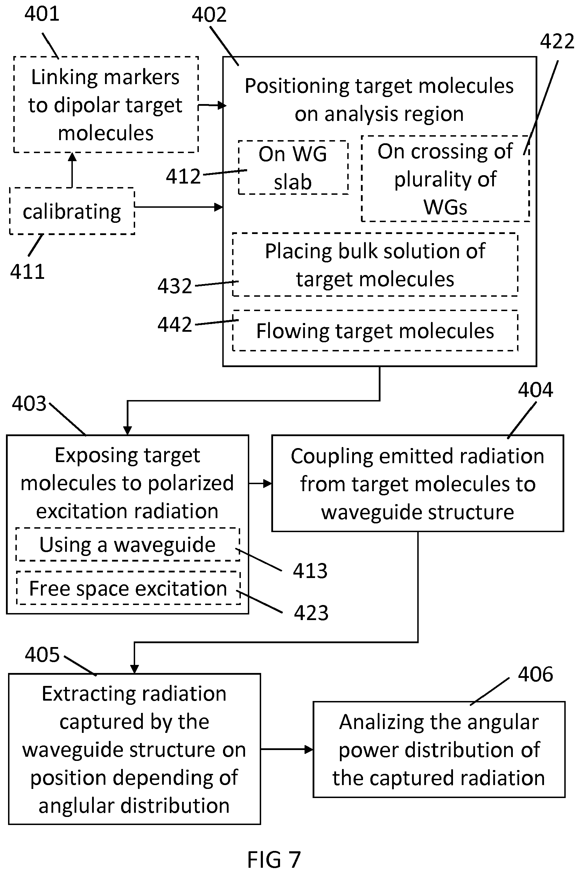

FIG 7 shows the steps of an exemplary embodiment of a method in accordance with embodiments of the present invention. First, the dipolar target molecules may be are linked 401 to fluorescent particles which are dispersed in a sample, e.g. a fluid sample with a liquid medium and fluorescent target molecules therein. Alternatively, the target molecules may themselves be fluorescent. If the target molecules are made of material which emits radiation that can be coupled to a waveguide upon excitation from a source of polarized radiation, linking 401 fluorescent markers is optional.

For example, the target molecule may be a biomolecule, and the label of the bioparticle may be a fluorescent particle, tag or dye, e.g. a fluorophore component which attaches to the biomolecule.

The medium may be a liquid with a known effect on the radiation, so its influence can be taken into account during the analysis. For example, the method may include performing 411 calibration, where fluorescence is measured only with buffer. This allows removing artifacts, such as waveguide fluorescence or the effect of the fluid and/or well on the coupled light (reflections, etc.).

The medium should allow free rotation of the target molecules and should allow bringing the target molecules to the analysis region or well. For example the sample may be a bulk solution.

The fluorescent target molecules (e.g. fluorescently labeled target molecules) are brought 402 to the analysis region, e.g. they may be positioned 402 on the top surface of a waveguide structure, e.g. close to the surface of a waveguide, e.g. of a slab waveguide, for instance in a fluidic well. This bringing of fluorescent target molecules to the analysis region can be done by placing 432 a bulk solution with fluorescent target molecules at the analysis region. In other embodiments, a flow of target molecules circulating in a fluid sample within a microfluid channel can be flowed 442 over the analysis region. The surface of the analysis region may preferably not bind molecules, although this is optional, because the method can be used to study binding dynamics.

In particular embodiments, the molecules may be positioned 412 for example on a waveguide slab, e.g. comprising a ring resonator, or on a structure comprising a star coupler, or they may be positioned 422 on a crossing of a plurality of waveguides, etc. The molecules may be brought within a fluid.

Once the target molecules are positioned on the analysis region, they are exposed 403 to polarized excitation radiation, e.g. linearly polarized light, which may be suitable for activating the fluorescent label or the fluorescent molecule, so the target molecules become excited.

The target molecules may be exposed to excitation radiation using 413 a waveguide to bring polarized radiation from a source to the analysis region (the waveguide being adapted to transmit such radiation), or alternatively they may be exposed using 423 free space excitation, e.g. by flooding the analysis region with polarized radiation, e.g. polarized illumination.

Fluorescent target molecules with a dipole component coinciding with the polarization of the excitation radiation will excite and start emitting light by fluorescence.

At least some molecules in the fluid will be positioned within the near field region of the waveguide system, the near field region being defined as explained above. Emission from fluorescent molecules sufficiently close to the surface of the waveguide structure (e.g. within the near field of the waveguide) couples 404 to said waveguide structure and propagates further away from the emission site. The emitted radiation has an angular distribution related to the average direction-dependent intensity profile of the plurality of molecules.

The radiation captured by the waveguide structure is extracted and observed 405 for different positions related to the angular profile of the target molecules and related to the rotation of the molecules and their angular speed.

The angular power distribution of the emission is analyzed 406, for example using photodetectors coupled to the waveguide structure. For example, each of the photodetectors may receive emitted radiation dependent on its orientation. Because the angular power distribution is related to the rotation speed of the molecules, it can be estimated taking into account the average fluorescence lifetime. As explained earlier, large molecules show a power distribution of the emitted radiation similar to the one at the initial position, and dependent on the polarization of the excitation radiation. Small molecules present a uniform power distribution, so a more uniform intensity of emitted radiation is extracted from all the available positions; e.g. the ring 105 of FIG 3 will be uniformly illuminated, or all the photodetectors of a sensing system 207 will detect similar intensity... The motion depends on the medium viscosity, molecular weight, etc.

The analysis of the detected signal, related to the intensity and the position at which it was extracted from the waveguide structure, can be carried out by a processing unit 602. The rotation speed, size, viscosity and other parameters related to the target molecules and the solution can be obtained from the processed data.

The present invention provides high signal to noise ratio, because small molecules such as unlinked markers will only be very weakly excited by polarized excitation radiation so their contribution to the output illumination will be small.

Embodiments of the present invention can be used in an immunoassay system. The system may for instance be used as a drug screening system. For example, it can be used in an antigen-antibody interaction characterization system. The present invention may also be used for development of novel therapeutic agents, for example in a protease assays system. The present invention can be used in a Kinase Assays system for screening for inhibitors of kinases, to find the drug for diseases (like cancer) that are caused by the malfunction of kinase in cell signaling pathways.

These systems may be implemented in a flow screening, thus providing high-throughput screening systems. However, the present invention is not limited to these applications, and it can be used to monitor DN hybridization, and/or for measurement of molecular weight (e.g. of proteins), and/or for measurement of the viscosity of the cell medium, to detect binding of molecules to a surface, etc.

## Claims

1. A photonic system (100, 200, 300) for analyzing target molecules which emit radiation upon being exposed to excitation radiation, the system comprising:
- a radiation source (101) adapted to provide excitation radiation with a predetermined polarization state,
- a photonics chip (102, 202, 302) including
an analysis region (103, 203, 303) for exposing target molecules to radiation from the radiation source, so target molecules with a dipole component along the direction of polarization of the excitation radiation emit radiation with an angular profile, and
a waveguide structure (104, 201, 204, 301, 304) for capturing radiation emitted from the analysis region by target molecules,
wherein the waveguide structure is adapted to extract the emitted radiation in different positions in accordance with the angular profile of the emitted radiation, for sampling the angular profile.

2. The system of the previous claim, further comprising a detection system (207, 306) for receiving radiation emitted by target molecules and captured by the waveguide structure,
wherein the detection system (207, 306) is adapted to analyze the radiation and to provide the angular profile of its polarization state.

3. The system of claim 2, wherein the detection system (207) is an integral part of the photonics chip (202).

4. The system of any of the previous claims, wherein the radiation source (101) is an integral part of the photonics chip (102, 202).

5. The system of claim 2, wherein the radiation source and/or the detector are elements physically separated from the photonics chip.

6. The system of any one of the previous claims, wherein the waveguide structure is a planar waveguide structure (104) comprising an analysis region (103, 203, 303) for exposing target molecules to radiation from the radiation source, the analysis region being adapted to receive radiation emitted from target molecules at a distance of the surface of the waveguide structure within the near field distance of the waveguide, and for capturing said radiation into the waveguide.

7. The system of any one of the previous claims, wherein the waveguide structure (104) comprises a ring grating (105).

8. The system of any one of claims 1 to 5, where the waveguide structure comprises a star coupler (201) coupled to a plurality of routing waveguides (204), where the analysis region (203) is on the point of convergence of the star coupler (201).

9. The system of claim 8, wherein one of the routing waveguides (206) is configured for introducing excitation radiation into the analysis region (203).

10. A biosensing device comprising the photonic system in accordance with any of claims 1 to 9.

11. Method of analyzing target molecules in a fluid sample, the method comprising:
- positioning (402) target molecules in a fluid sample on an analysis region,
- exposing (403) the target molecules to excitation radiation with a predetermined polarization state,
- coupling (404) radiation emitted by a target molecule with an angular profile from the analysis region into a waveguide structure,
- extracting (405) the radiation at different positions which depend on the components of the angular profile of the emitted radiation, for sampling the angular profile, and
- analyzing (406) the radiation signal captured by the waveguide structure and providing the angular distribution of the coupled radiation.

12. The method of claim 11, wherein positioning (402) target molecules on an analysis region comprises bringing (412, 422) target molecules at a distance to the surface of of a planar waveguide structure within the near field distance.

13. The method of claim 11, wherein positioning (402) target molecules on an analysis region comprises positioning (422) target molecules to the crossing of a plurality of routing waveguides in a star coupler.

14. The method of any one of claims 11 to 13, wherein exposing the target molecules to excitation radiation comprises directing (413) radiation with a waveguide from a source to the analysis region.

15. The method of any one of claims 11 to 14, wherein positioning target molecules in a fluid sample on an analysis region comprises placing (432) a bulk solution including target molecules on the analysis region.
